## Europäisches Patentamt

## European Patent Office

## Office européen des brevets

(19)

(11) Veröffentlichungsnummer: **0 078 438**
**B1**

(12)

# EUROPÄISCHE PATENTSCHRIFT

(45) Veröffentlichungstag der Patentschrift:
**04.12.85**

(51) Int. Cl.⁴: **B 65 G 19/22**

(21) Anmeldenummer: **82109601.3**

(22) Anmeldetag: **18.10.82**

(54) **Reparaturteil für einen Mitnehmersteg von Stegkettenförderern.**

(30) Priorität: **02.11.81 DE 8131983 U**

(43) Veröffentlichungstag der Anmeldung:
**11.05.83 Patentblatt 83/19**

(45) Bekanntmachung des Hinweises auf die Patenterteilung:
**04.12.85 Patentblatt 85/49**

(84) Benannte Vertragsstaaten:
**BE DE FR GB**

(56) Entgegenhaltungen:
**DE - B - 1 050 268**
**FR - A - 2 248 214**

(73) Patentinhaber: **Firma Astrid Komotzki, Römerstrasse 9,
D-4600 Dortmund 41 (DE)**

(72) Erfinder: **Komotzki, Michael, Lichtendorfer-Strasse 127,
D-5840 Schwerte 1 (DE)**

(74) Vertreter: **Habbel, Hans-Georg, Dipl.-Ing.,
Postfach 3429 Am Kanonengraben 11, D-4400 Münster
(DE)**

## Beschreibung

Die Erfindung bezieht sich auf ein Reparaturteil für einen Mitnehmersteg von Stegkettenförderern gemäß dem Oberbegriff des Hauptanspruches.

Der Transport, z. B. der gewonnenen Steinkohle, wird in großem Umfang durch in Profilrinnen endlos umlaufende Stegkettenförderer bewirkt. Die Ketten dieser Stegkettenförderer tragen dabei Mitnehmer, die in einem Führungsprofil der Förderrinnen gleiten und daher erheblichem Verschleiß ausgesetzt sind.

Bisher wurden derartige Mitnehmerstege dadurch wieder einsatzfähig gemacht, daß an den Mitnehmerstegen eine Auftragschweißung durchgeführt wurde. Eine solche Auftragschweißung hat aber den Nachteil, daß unkontrollierte Aufhärtungen entstehen, wenn zuviel Schweißgut aufzutragen ist und zu große Schweißbäder entstehen. Auftragschweißungen schichtweise aufzutragen ist zu kostenaufwendig.

Ein weiterer wesentlicher Nachteil der bisher bekannten Arbeitsweise ist, daß in den eigentlichen Förderrinnen ein erhöhter Verschleiß dadurch auftritt, daß die Auftragschweißung nicht genau dem ehemaligen Profil des Mitnehmersteges entsprechen kann.

Es ist durch Vorbenutzung auch bekanntgeworden, zur Reparatur von Mitnehmerstegen das verschlissene Kopfteil abzutrennen und der Form dieses verschlissenen Kopfteiles angepaßte Kopfteile anzuschweißen. Hierbei wird eine relativ dicke Schweißnaht zwischen dem Reparaturendstück und dem Stegteil vorgesehen, wobei die durch die Schweißnaht miteinander zu verbindenden Wandteile in Förderrichtung des Mitnehmersteges geradlinig ausgebildet sind, d. h. zwei in Förderrichtung des Mitnehmersteges ausgerichtete Ebenen werden aneinandergeschweißt.

Bei den nicht zu vermeidenden Druckbeanspruchungen zwischen der Mitte des Mitnehmersteges und den äußeren Kopfteilen, treten hier Beanspruchungen innerhalb der Verbindungsschweißnaht auf, die zu einem sehr schnellen Abbrechen des neu angeschweißten Kopfteiles führen.

Der Erfindung liegt die Aufgabe zugrunde, das vorbeschriebene bekannte Verfahren noch zu verbessern und ein Reparaturendstück zu schaffen, das den unter Tage auftretenden Beanspruchungen besser gewachsen ist, so daß die Standzeit auch reparierter Mitnehmerstege erhöht werden kann.

Diese der Erfindung zugrunde liegende Aufgabe wird durch die Lehre des kennzeichnenden Teiles des Hauptanspruches gelöst.

Durch das erfindungsgemäße Verfahren wird durch die Formgestaltung der Anschlußwand erreicht, daß die auf das Reparaturendstück beim Betrieb des Mitnehmersteges wirkenden Kräfte besser aufgenommen und verteilt werden.

Gemäß einer Weiterbildung des erfindungsgemäßen Vorschlages wird weiterhin vorgesehen, daß dann, wenn die obere und untere Hälfte des Stegteiles unterschiedliche Neigungswinkel gegenüber einer horizontalen Ebene aufweisen, die einmal 20°, zum andern 30° beträgt, vorgesehen wird, daß die Ebenen der Anlageflächen in der Draufsicht gesehen senkrecht stehen und die obere und untere Fläche jeweils einen gleichen Winkel von 20° mit der Horizontalen aufweist, während die Schnittlinie, d. h. die Trennlinie, zwischen Mitnehmersteg und verschlissenem Bereich des Kopfteiles, d. h. also die Wandung, die mit den Anschlußwandungen des Reparaturendstückes in Kontakt kommt, eine Neigung von 5° gegenüber der Längsachse des Mitnehmersteges aufweist.

Weitere vorteilhafte Ausgestaltungen der Erfindung gehen aus der nachfolgenden Beschreibung anhand der Zeichnung hervor. Die Zeichnung zeigt dabei in

Fig. 1 eine Frontansicht und in

Fig. 2 eine Draufsicht auf einen Mitnehmersteg;

Fig. 3 zeigt in größerem Maßstab schaubildlich das Reparaturendstück und schließlich

Fig. 4 eine Frontansicht rein schematisch zur Verdeutlichung der Winkel zwischen Reparaturendstück und Kopfteil des Mitnehmersteges.

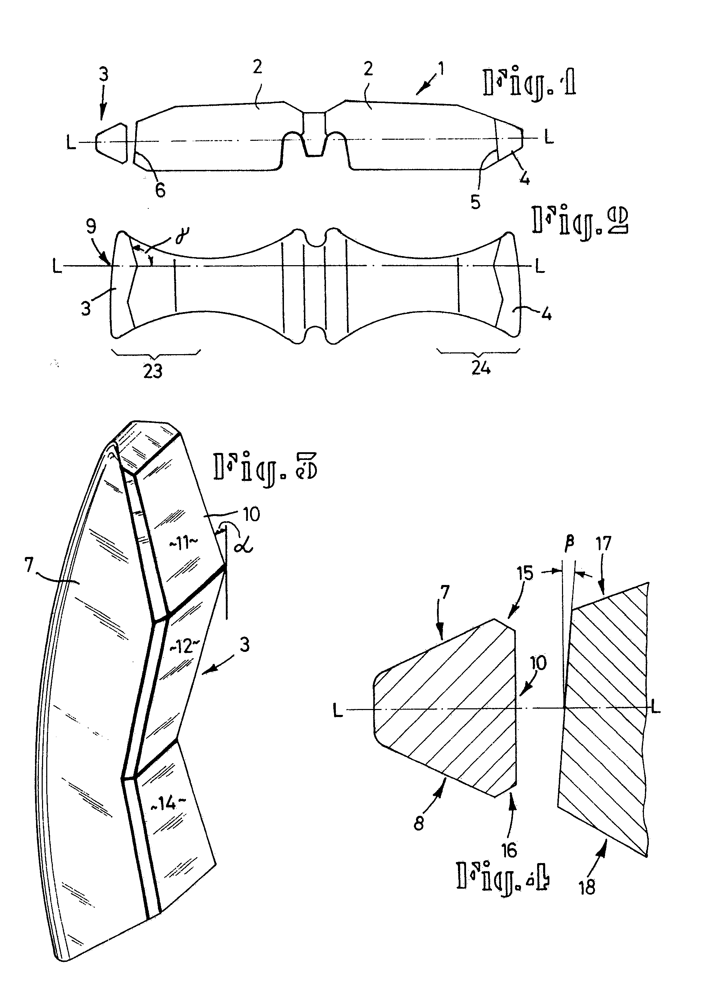

In der Zeichnung ist mit 1 ein Mitnehmersteg bezeichnet, dessen beide seitlichen Stegteile 2 aus den beiden seitlichen Kopfteilen 23 und 24 und zwei Endstücken 3 und 4 bestehen, wobei — wie dies die Linie 5 bzw. 6 verdeutlicht — die Kopfteile 23 und 24 bei dem dargestellten Ausführungsbeispiel in Fig. 1 und 2 bereits mit Reparaturendstücken 3 und 4 versehen sind.

Fig. 2 zeigt eine Draufsicht auf den Mitnehmersteg 1, und hier ist die Ausbildung der Reparaturendstücke 3 und 4 deutlicher zu erkennen.

Mit L-L ist die Längsachse des Mitnehmersteges in Fig. 1, 2 und Fig. 4 eingezeichnet.

Aus Fig. 3 ist die Ausbildung eines Reparaturendstückes, z. B. des Endstückes 3, deutlicher erkennbar. Jedes Reparaturendstück 3 oder 4 weist eine obere Fläche 7 und eine untere Fläche 8 auf, während die Außenfläche (Fig. 2) mit 9 bezeichnet ist. Der Außenfläche gegenüberliegend ist eine Anschlußwandung 10 vorhanden, die bei dem dargestellten Ausführungsbeispiel aus drei Anschlußwandungen 11, 12 und 14 besteht, wobei diese Anschlußwandungen zickzackförmig gegeneinander versetzt sind, und zwar in einem Winkel $\alpha$ von etwa 15°, wobei der Winkel $\alpha$ gebildet wird zwischen der Ebene der Anschlußwandung 11 zu einer normal zur Längsachse L-L eines Mitnehmersteges 1 verlaufenden, in der Ebene des Mitnehmersteges 1 ausgerichteten Achse, wobei diese Ebene des Mitnehmersteges die Ebene gemäß Fig. 2 ist. Mit dem Winkel $\gamma$ ist die Stellung der Ebene der Anschlußwandung 11 gegenüber der Längsachse L-L bezeichnet.

Gemäß der Erfindung ist weiterhin vorgesehen, daß die in Arbeitsrichtung des Mitnehmersteges 1 gesehen erste Anschlußwandung 11 des Reparaturendstückes eine Ebene aufweist, die zum Stegteil 2 des Mitnehmersteges 1 hingerichtet ist, so wie dies besonders deutlich aus Fig. 2 zu ersehen ist, so daß der durch die Zugkraft, die am Mitnehmersteg 1 angreift, auftretende Druck im Bereich der Verbindung zwischen der Anschlußwandung 11 und dem Kopfteil 23 des Mitnehmersteges 1 auf den Körper des Mitnehmersteges 1 hingerichtet ist.

Der Übergang zwischen der oberen und unteren Fläche 7, 8 zu den Anschlußwandungen 11, 12 und 14 ist, wie dies besonders deutlich die Fig. 4 zeigt, angefast, wobei also die Fasen 15 und 16 geschaffen werden, die zur Aufnahme des Schweißmaterials dienen.

Fig. 4 verdeutlicht, daß die obere und untere Fläche 17 bzw. 18 eines Mitnehmersteges in unterschiedlichen Winkeln geneigt sind, wobei der eine Winkel 20° und der andere Winkel 30° beträgt. Um nun eine möglichst geringe Vorratshaltung an Reparaturendstücken zu ermöglichen, erfolgt der Trennschnitt zwischen dem verschlissenen Endstück 3 bzw. 4 und dem Kopfteil 23 bzw. 24 des Mitnehmersteges 1 unter einem Winkel $\beta$ von 5°, wobei dieser Winkel $\beta$ gegenüber der Vertikalen ausgerichtet ist.

Die obere und untere Fläche des Reparaturendstückes weist einen gleichen Winkel von 20° auf, so daß nunmehr aufgrund der Schrägen, die durch den Winkel $\beta$ am Hauptteil gebildet wird, durch Drehen des Reparaturendstückes jeweils die gewünschte Neigung auch der oberen und unteren Fläche des Reparaturendstückes erreichbar ist.

Die Reparaturendstücke 3 und 4 bestehen vorzugsweise aus dem gleichen Werkstoff wie das Stegteil 2 des Mitnehmersteges 1, jedoch ist es natürlich auch möglich, in diesem Bereich verschleißfestere Werkstoffe einzusetzen, ohne daß dadurch der Rahmen der Erfindung verlassen wird.

## Patentansprüche

1. Reparaturteil für einen Mitnehmersteg von Stegkettenförderern, bestehend aus einem dem Profil des verschleißanfälligen Kopfteiles des seitlichen Stegteiles (2) des Mitnehmersteges (1) angepaßten Reparaturendstück (3, 4) mit einer dem Stegteil (2) des Mitnehmersteges (1) zugewandten Anschlußwandung (10) mit der das Reparaturendstück (3, 4) an das verbleibende Stegteil (2) anschweißbar ist, dadurch gekennzeichnet, daß das Endstück (3, 4) an seiner Anschlußwandung (10) in der Draufsicht gesehen zickzackförmig ausgebildet ist.

2. Reparaturteil wenigstens nach Anspruch 1, dadurch gekennzeichnet, daß die zickzackförmige Gestaltung der Anschlußwand drei Anschlußwandungen (11, 12, 14) aufweist.

3. Reparaturteil nach Anspruch 1 und 2, dadurch gekennzeichnet, daß die Ebene der Anschlußwandungen (z. B. 11, 12, 14) in einem Winkel ($\alpha$) von 15° zu einer normal zur Längsachse (L-L) des Mitnehmersteges (1) verlaufenden, in der Ebene des Mitnehmersteges (1) ausgerichteten Achse stehen.

4. Reparaturteil nach einem oder mehreren der vorhergehenden Ansprüche, dadurch gekennzeichnet, daß die in Arbeitsrichtung des Mitnehmersteges (1) gesehen erste Anschlußwandung (11) eine Ebene aufweist, die zum Hauptteil (2) hingerichtet ist, d. h. mit der Längsachse (L-L) des Mitnehmersteges (1) einen Winkel ($\gamma$) aufweist, der größer als 90° ist.

5. Reparaturteil wenigstens nach Anspruch 1 in Verbindung mit Mitnehmerstegen, deren obere und untere Fläche im Bereich der Kopfteile (23, 24) unterschiedliche Neigungswinkel gegenüber einer horizontalen Ebene aufweisen, die einmal 20°, zum anderen 30° betragen, dadurch gekennzeichnet, daß die Ebenen der Anschlußwandungen (11, 12, 14) in der Draufsicht gesehen senkrecht stehen und die obere und untere Fläche (7, 8) jeweils einen gleichen Winkel von 20° mit der Horizontalen aufweist, während die Schnittlinie im Mitnehmersteg, die mit den Anschlußwandungen des Reparaturendstückes in Kontakt kommt, eine Neigung ($\beta$) von 5° gegenüber der Längsachse (L-L) des Mitnehmersteges aufweist.

6. Reparaturteil wenigstens nach Anspruch 1, dadurch gekennzeichnet, daß die Grenzkante zwischen der oberen und unteren Fläche und den Flächen der Anschlußwandung (10) angefast (bei 15, 16) ist.

7. Reparaturteil nach einem oder mehreren der vorhergehenden Ansprüche, dadurch gekennzeichnet, daß das Reparaturendstück (3, 4) aus dem gleichen Werkstoff wie der eigentliche Mitnehmersteg (1) besteht.

## Claims

1. Repair piece for a scraper of scraper chain conveyors, comprising an end repair part (3, 4) which is adapted to the configuration of the wear-prone head portion of the lateral scraper element (2) of the conveyor scraper (1), with a connecting wall (10) which is directed towards the scraper element (2) of the conveyor scraper (1) and with which the end repair part (3, 4) is weldable to the rest of the scraper element (2), characterised in that the end part (3, 4) at its connecting wall (10) has a zigzag formation as seen in plan view.

2. Repair piece at least according to claim 1, characterised in that the zigzag formation of the connecting wall comprises three connecting wall surfaces (11, 12, 14).

3. Repair piece according to claims 1 and 2, characterised in that the planes of the connecting wall surfaces (e.g. 11, 12, 14) are situated at an angle ($\alpha$) of 15° relatively to an axis which extends at right angles to the longitudinal axis (L-L) of the scraper (1) and which is aligned in the plane of the scraper (1).

4. Repair piece according to one or more of the preceding claims, characterised in that the first connecting wall surface (11) as viewed in the working direction of the scraper (1) has a plane which is directed towards the main portion (2) i.e. forms with the longitudinal axis (L-L) of the scraper (1) an angle $(\gamma)$ which is greater than 90°.

5. Repair piece at least according to claim 1 in conjunction with scrapers whose upper and lower surfaces have in the region of the head portions (23, 24) different angles of inclination relatively to a horizontal plane amounting to in the one case 20° and in the other 30°, characterised in that the planes of the connecting wall surfaces (11, 12, 14) as viewed in plan view are vertically disposed, and the upper and lower surfaces (7, 8) each form a like angle of 20° with the horizontal, whereas the section line in the scraper which comes into contact with the connecting wall surfaces of the end repair part has an inclination $(\beta)$ of 5° relatively to the longitudinal axis (L-L) of the scraper.

6. Repair piece at least according to claim 1, characterised in that the boundary edge between the upper and lower surfaces and the surfaces of the connecting wall (10) is chamfered (at 15, 16).

7. Repair piece according to one or more of the preceding claims, characterised in that the end repair part (3, 4) is made from the same material as the actual scraper (1).

**Revendications**

1. Elément de réparation pour raclettes de transporteurs à raclettes, composé d'un embout de réparation (3, 4) adapté au profil de la partie de tête sujette à usure de la partie pleine latérale (2) de la raclette (1), et qui présente une face d'assemblage (10) dirigée vers la partie pleine (2) de la raclette (1), au moyen de laquelle l'embout de réparation (3, 4) peut être soudé à la partie pleine (2) qui subsiste, caractérisé en ce que l'embout (3, 4) est d'une forme en zig-zag, sur sa face d'assemblage (10), vue de dessus.

2. Elément de réparation selon au moins la revendication 1, caractérisé en ce que la configuration en zig-zag de ladite face d'assemblage (10) présente trois facettes (11, 12 et 14).

3. Elément de réparation selon les revendications 1 et 2, caractérisé en ce que le plan desdites facettes (11, 12 et 14) forme un angle $(\alpha)$ de 15° avec un axe contenu dans le plan de la raclette (1) et s'étendant perpendiculairement à l'axe longitudinal (L-L) de la raclette (1).

4. Elément de réparation selon une ou plusieurs des revendications précédentes, caractérisé en ce que ladite première facette (11), considérée dans le sens du travail de la raclette (1), présente un plan qui est dirigé vers la partie principale (2), formant par exemple avec l'axe longitudinal (L-L) de la raclette (1) un angle $(\gamma)$ qui est plus grand que 90°.

5. Elément de réparation selon au moins la revendication 1, en combinaison avec des raclettes dont les faces supérieure et inférieure présentent, dans la région des parties de tête (23, 24) des angles d'inclinaison différents par rapport au plan horizontal, qui sont de 20° pour l'un et de 30° pour l'autre, caractérisé en ce que les plans desdites facettes (11, 12, 14) sont verticaux (considérés dans une vue de dessus), et les surfaces supérieure et inférieure (7, 8) forment chacun le même angle de 20° avec l'horizontale, tandis que la ligne d'intersection de la raclette, qui entre en contact avec les facettes de l'embout de réparation, forme un angle d'inclinaison $(\beta)$ de 5° par rapport à l'axe longitudinal (L-L) de la raclette.

6. Elément de réparation selon au moins la revendication 1, caractérisé en ce que l'arête limite, entre chacune des surfaces supérieure (7) et inférieure (8) et les surfaces de la face d'assemblage (10), est chanfreinée (en 15, 16).

7. Elément de réparation selon une ou plusieurs des revendications précédentes, caractérisé en ce que l'élément de réparation (3, 4) est fait de la même matière que la raclette (1) proprement dite.

Fig. 1

Fig. 2

Fig. 3

Fig. 4